# EUROPEAN PATENT SPECIFICATION

(11) **EP 0 466 034 B1**
(45) Date of publication and mention of the grant of the patent: **19.01.1994**
(21) Application number: 91111136.7
(22) Date of filing: 04.07.1991
(51) Int. Cl.: B60Q 1/20, B60Q 1/04

(54) **Headlamp for automobile vehicles, in particular a fog lamp**
Scheinwerfer für Fahrzeuge, insbesondere Nebelscheinwerfer
Phare pour véhicule en particulier phare antibrouillard

(30) Priority: 13.07.1990 IT 6754290
(43) Date of publication of application: 15.01.1992
(73) Proprietor: CARELLO S.p.A., I-10135 Torino (IT)
(72) Inventor: Ressia, Alessio, I-10073 Cirie (IT)
(74) Representative: Jorio, Paolo, Dr. Ing.

(56) References cited:
- DE-A- 1 243 995

## Description

The present invention relates to a headlamp for automobile vehicles, in particular a fog lamp.

As is known, fog lamps are generally mounted in the vehicle bumper in a detachable way so that the headlamp or its components can be inspected and replaced when necessary. A known fog lamp is mounted in an appropriate cavity of the bumper, firstly by inserting a first side surface of the lamp and causing this lamp to rotate about this first surface until a spring, provided on a second side surface of the lamp opposite to the first, is engaged behind a projection rigid with the bumper. The dismantling of the lamp similarly requires the rotation of the fog lamp about this first side surface, after the spring has been unhooked from the opposite side surface using a pointed object, for instance a screwdriver, which is inserted in the bumper via an appropriate hole.

The rotation of the lamp makes it necessary for the latter to be housed in the cavity with clearance with the result that, after the release of the lamp, there is a peripheral slot between the lamp and the bumper which is closed by a frame generally screwed to the bumper.

This fastening system is disadvantageous in that the assembly and dismantling of the frame requires relatively long periods as well as appropriate equipment which entails relatively high costs along the production line.

In addition, the frame may be damaged by the dismantling and subsequent assembly operations, thereby compromising the overall appearance of the bumper.

This type of screw fastening is also disadvantageous in that the screws may be lost during the inspection and replacement of parts of the lamp and during the movement of the vehicle; in the latter case the detachment of the frame may even be possible.

DE-B-12 43 995 shows a headlamp for vehicles detachably mounted in a cavity. The space between the cavity and a front transparent member is closed by a detachably mounted frame.

The object of the present invention is to provide a headlamp for automobile vehicles, in particular a fog lamp, whose frame may be assembled and dismantled in a simple and rapid manner, without requiring particular tools and without the risk of compromising the appearance of the frame or of losing parts thereof.

The object of the invention is solved by the features of claim 1.

The present invention provides a headlamp for automobile vehicles, in particular a fog lamp, comprising a transparent member, the headlamp being secured in a cavity of the vehicle and bounding, together with this cavity, a space which can be closed by a frame which can be secured detachably to the vehicle, characterized in that it comprises support and guide means fixed to the headlamp and to the frame so that the frame can be moved between a retracted closed position and a forward open position, in which the frame extends substantially at the level of the transparent member of the headlamp and at a distance from the headlamp respectively.

A preferred embodiment of the invention is described in further detail below, purely by way of an example, with reference to the accompanying drawings, in which:
Fig. 1 is a front view of a fog lamp and its associated frame mounted on the bumper of a vehicle;
Fig. 2 is a partial cross-section through the fog lamp along the line II-II of Fig. 1;
Fig. 3 is a longitudinal section through the fog lamp along the line III-III of Fig. 1;
Fig. 4 is a top view of the fog lamp and its associated frame in two separate positions;
Fig. 5 is a side view of a detail of the headlamp in the direction A of Fig. 4.

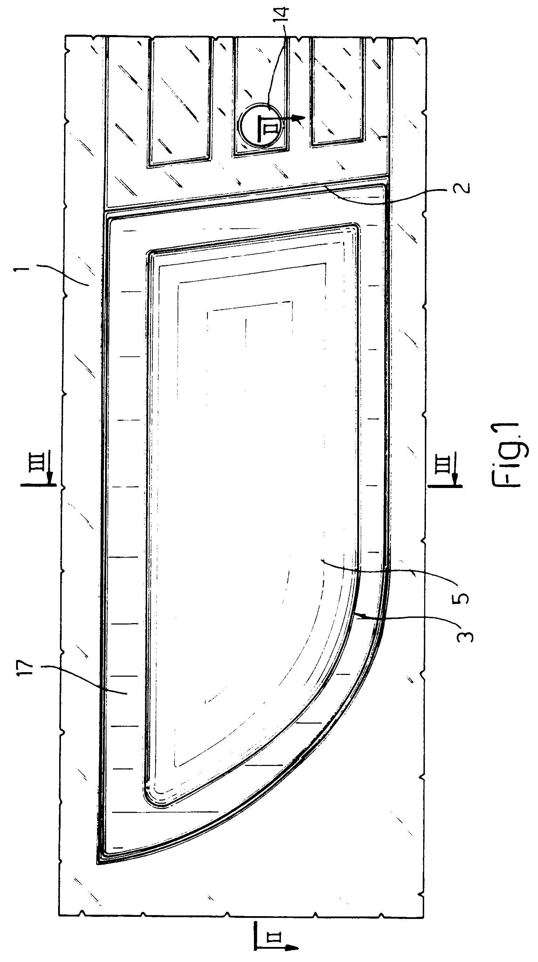

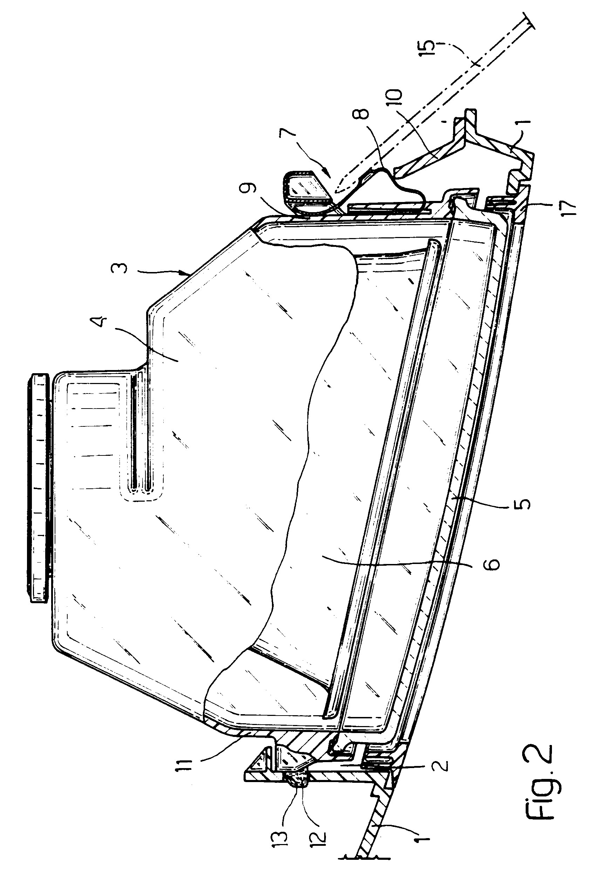

Fig. 1 shows part of the front bumper 1 of a vehicle which has a cavity 2 housing a headlamp 3, in this case a fog lamp, with clearance. The lamp 3, comprising in outline an outer casing 4 closed at the front by a transparent member 5 and an inner reflector 6, is secured to the bumper 1 by elastic hooking means 7 shown in Fig. 2.

In detail, the elastic hooking means 7 comprise a shaped spring 8 secured to a first side surface 9 of the casing 4 of the lamp 3 and engaging, in the hooked position shown in Fig. 2, against a projection 10 of the bumper 1 which faces towards the interior of this bumper so as to prevent the lamp 3 from falling out of the cavity 2 in the bumper 1.

A second side surface 11 of the lamp opposite the first has a projection 12 housed, in the hooked position of the lamp 3, in a hole 13 in the bumper 1.

In order to assemble the lamp 3, the second side surface 11 of the lamp 3 is firstly inserted, causing the projection 12 to enter the hole 13, and the lamp 3 is then rotated in an anti-clockwise direction with respect to Fig. 2, pivoting on the projection 12, until the spring 8 passes beyond the projection 10 by elastic deformation. The shape of the spring 8 then ensures that the lamp 3 is held stably in position.

In order to dismantle the lamp 3 from the bumper 1, the latter is provided, in a position adjacent to the cavity 2 and facing the first side surface 9 of the lamp 3, with a hole 14 through which it is possible to insert an elongate tool, for instance a screwdriver 15, which, when pressed on the spring 8 in the direction of the transparent member 5, allows the spring 8 to be released from the projection 10 and therefore makes it possible to rotate the lamp 3 for removal.

In order to allow the lamp 3 to be rotated during the assembly and dismantling of this lamp 3, as described above, the dimensions of the cavity 2 are greater than the transverse volume of the lamp 3 as a result of which a space 16 is defined between the lamp 3 and the bumper 1 and is closed at the front by a frame 17.

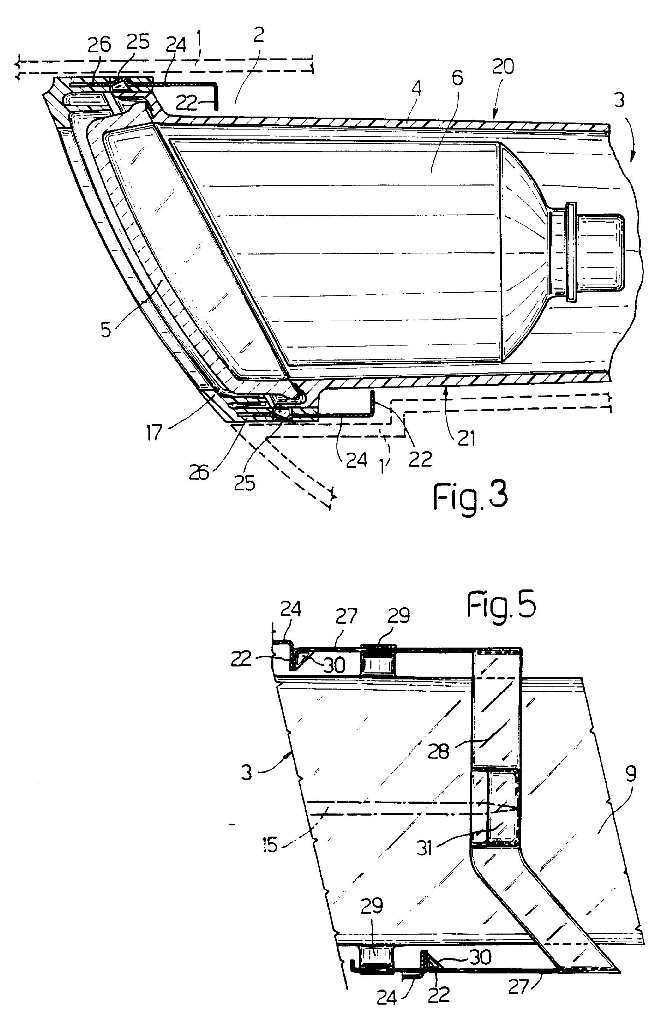

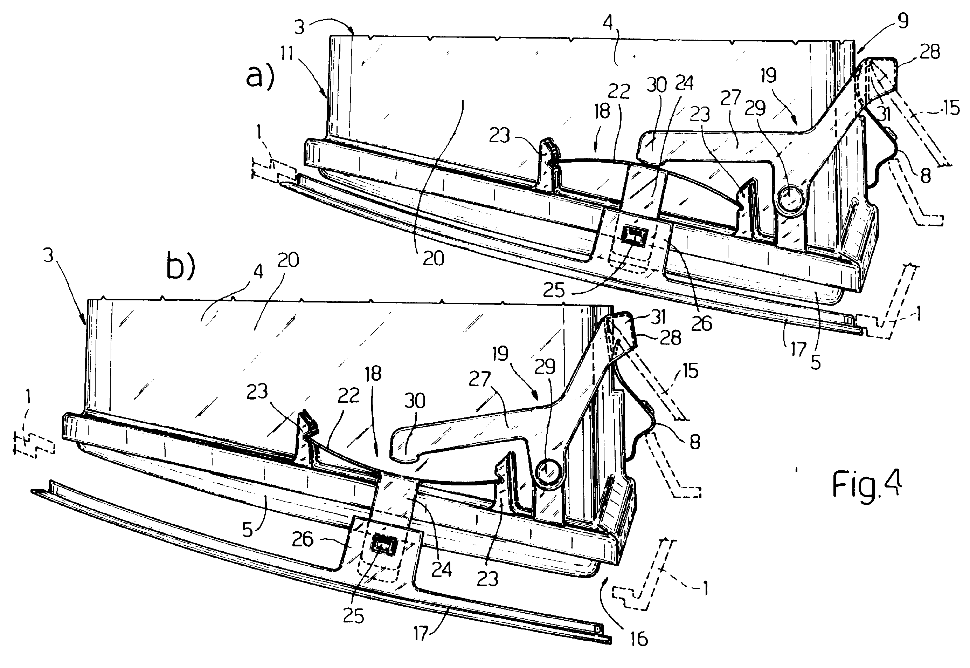

As shown in Figs. 3 to 5, the frame 17 is secured to the lamp 3 by support and guide means 18 which allow it to be moved between a retracted closed position and a forward open position, in which, with the lamp 3 mounted in the bumper 1, the frame 17 closes the space 16 at the front and is substantially aligned with the front surface of the bumper 1 and the transparent member 5 (Fig. 4a) and respectively extends at a distance from the transparent member 5 and projects from the bumper 1 so as not to impede the rotation of the lamp 3 (Fig. 4b).

As shown in Figs. 3 to 5, the lamp 3 is also provided with actuation means 19 for the frame 17 which can be accessed from outside the bumper via the hole 14 shown in Fig. 1 and can be engaged by the screwdriver 15 so as to achieve the movement of the frame from the closed retracted position to the forward open position.

In detail, the support and guide means 18 comprise a pair of bistable members fixed to the lamp 3 on two side surfaces 20 and 21 (reciprocally opposite and adjacent to the side surfaces 9 and 11), each of which is defined by a leaf spring 22. Each leaf spring 22 (see in particular Fig. 4 which shows the support and guide means 18 disposed on the side surface 20 of the lamp 3) is connected at its ends to a pair of projections 23 rigid with the casing 4 of the lamp 3. The central portion of the leaf spring 22 is rigid with an arm 24 which extends transverse to this spring 22 towards the frame 17 and is fixed to the frame 17 by a tooth 25 defined by the arm 24 and engaged in a portion 26 of the frame 17.

The leaf spring 22 is precompressed so as to define two stable positions, in a first of which (unhooked position) the leaf spring 22 is bent towards the frame 17 (i.e. its convex portion faces the frame 17) and the frame 17 is therefore in the forward open position, and in the second of which (hooked position) the leaf spring is bent in the opposite direction (i.e. with its concave portion facing the frame 17) and the frame 17 is thus in the retracted closed position.

As shown in Figs. 4 and 5, the actuation means 19 of the leaf springs 22 are formed by a pair of rockers 27, one for each leaf spring 22, each disposed on a respective side surface 20, 21 of the lamp 3 and rigidly connected by a crossbar 28 which extends along the side surface 9 of the casing 4. Each rocker 27 is pivoted on the respective side surface 20, 21 by a pivot 29 and has a portion 30 engaging with the central portion of the respective leaf spring 22. The crossbar 28 in turn has a central actuation portion 31 which can be accessed by the screwdriver 15 via the hole 14 so as to allow the rotation of the rockers 27 and the release of the leaf springs 22 from the hooked to the unhooked position.

In order to mount the lamp 3 in the cavity 2, the leaf springs 22 are firstly connected to the casing 4 of the lamp 3 and to the frame 17, inserting the ends of the springs 22 into the projections 23 and engaging the teeth 25 of the arms 24 in the portions 26. The lamp 3 is then inserted in a known manner in the cavity 2 of the bumper 1 until the spring 8 is hooked behind the projection 10. During this stage, the frame 17 is in its forward open position. The frame 17 is finally brought into its retracted closed position by exerting a slight pressure on the frame 17 in the direction of the lamp 3 so as to bring the leaf springs 22 into their hooked position as shown in Fig. 4a.

In contrast, when it is necessary to dismantle the lamp 3, the frame 17 is firstly brought into its forward open position, by inserting a screwdriver 15 into the hole 14 and pressing the actuation portion 31 of the crossbar 28 so that the rockers 27 are caused to rotate in the anticlockwise direction (with respect to Fig. 4). Consequently the engagement portions 30 urge the respective leaf spring 22 in the direction of the frame, causing the spring to move into its unhooked position as a result of which the frame is brought into its forward open position. The spring 8 is thus unhooked from the projection 10 of the bumper 1 and the lamp 3 can be rotated and removed from the cavity 2.

As can be seen therefore, the mounting of the frame on the lamp and the opening and closing of the frame with respect to the lamp to allow the assembly and dismantling of the lamp involve very simple and rapid operations which do not require special tools. The release of the bistable member to bring the frame 17 into the forward open position can in particular be carried out with the same screwdriver needed for the unhooking of the lamp 3 from the bumper 1.

In addition, the frame 17 is always hooked to the lamp 3 even when the latter is dismantled with the result that there is no risk of losing the screws or the frame itself while the vehicle is moving or during operations to inspect and/or replace lamp components.

There is no risk of damage to the frame during assembly and dismantling operations and the frame can therefore be embodied with the preferred appearance, for instance painted the same colour as the vehicle, while eliminating any tolerance and play in the mounting of the lamp.

## Claims

1. A headlamp (3) for automobile vehicles, in particular a fog lamp, comprising at its front a transparent member (5) closing an outer casing (4), the headlamp (3) being mounted detachably in a cavity (2) of the vehicle and bounding, together with this cavity (2), a space (16) which can be closed by a frame (17) secured detachably to the vehicle, characterized in that support and guide means (18) are fixed to the lamp (3) and to the frame (17) so as to allow the frame (17) to be moved between a retracted closed position and forward open position, in which the frame (17) extends substantially at the level of the transparent member (5) of the headlamp (3) and at a distance from the headlamp (3) respectively.

2. A headlamp as claimed in claim 1, characterized in that it comprises actuation means (19) for the frame (17) which can be accessed from outside the vehicle and which act on support and guide means (18) for moving the frame (17) from the retracted closed position to the forward open position.

3. A headlamp as claimed in claim 1 or 2, characterized in that the support and guide means (18) comprise at least one bistable member (22) supported by the lamp (3) and secured to the frame (17).

4. A headlamp as claimed in claim 3, characterized in that the bistable member comprises a leaf spring (22) connected at its ends to the lamp (3) with precompression, a central portion of which is rigid with the frame (17), the spring (22) being flexibly moved between two stable hooked and unhooked positions, in which the spring (22) has its concave portion facing towards the frame (17) and has its convex portion facing towards the frame (17) respectively.

5. A headlamp as claimed in claim 4, characterized in that the centre of the spring (22) is rigid with an arm (24) extending transverse to the spring (22) and engaged in the frame (17) by a tooth (25).

6. A headlamp as claimed in claims 4 or 5, characterized in that it comprises at least one rocker member (27) secured to the lamp (3) and having a portion (30) engaging with the spring (22).

7. A headlamp as claimed in claim 6, characterized in that the rocker member (27) is pivoted (29) on the lamp (3) and has an actuation portion (31) accessible from outside the vehicle, the engagement portion (30) extending towards the spring (22) so as to cause the release of this spring (22) from the hooked to the unhooked position when pressure is exerted on the actuation portion (31) from outside by a tool (15) of elongate shape.

## Patentansprüche

1. Ein Scheinwerfer (3) für Kraftfahrzeuge, insbesondere ein Nebelscheinwerfer, umfassend an seiner Front ein transparentes Bauteil (5), das ein äußeres Gehäuse (4) abschließt, wobei der Scheinwerfer (3) lösbar in einem Hohlraum (2) des Fahrzeugs montiert ist und zusammen mit diesem Hohlraum (2) einen Raum (16) begrenzt, der von einem Rahmen (17) abgeschlossen werden kann, welcher lösbar an dem Fahrzeug befestigt ist, **dadurch gekennzeichnet,** daß Stütz- und Führungsmittel (18) an dem Scheinwerfer (3) und an dem Rahmen (17) derart befestigt sind, daß der Rahmen (17) zwischen einer eingezogenen geschlossenen Position und einer vorderen offenen Position beweglich ist, in welcher der Rahmen (17) sich im wesentlichen auf dem Niveau des transparenten Bauteils (5) des Scheinwerfers (3) bzw. in einem Abstand von dem Scheinwerfer (3) erstreckt.

2. Ein Scheinwerfer nach Anspruch 1, dadurch gekennzeichnet, daß er Betätigungsmittel (19) für den Rahmen (17) umfaßt, die von außerhalb des Fahrzeugs zugänglich sind und die auf Stütz- und Führungsmittel (18) für das Bewegen des Rahmens (17) aus der zurückgezogenen Schließposition in die offene vordere Position einwirken.

3. Ein Scheinwerfer nach Anspruch 1 oder 2, dadurch gekennzeichnet, daß die Stütz- und Führungsmittel (18) mindestens ein bistabiles Bauteil (22) umfassen, getragen von der Lampe (3) und befestigt an dem Rahmen (17).

4. Ein Scheinwerfer nach Anspruch (3), dadurch gekennzeichnet, daß das bistabile Bauteil eine Blattfeder (22) umfaßt, die an ihren Enden mit der Lampe (3) unter Vorspannung verbunden ist, wobei ein zentraler Abschnitt derselben starr mit dem Rahmen (17) verbunden ist, wobei die Feder (22) zwischen zwei stabilen eingehakten bzw. nicht verhakten Positionen flexibel beweglich ist, in welchen die Feder (22) ihren konkaven Abschnitt dem Rahmen (17) zukehrt bzw. dem Rahmen (17) ihren konvexen Abschnitt zukehrt.

5. Ein Scheinwerfer nach Anspruch 4, dadurch gekennzeichnet, daß das Zentrum der Feder (22) starr mit einem Arm (24) verbunden ist, der sich quer zu der Feder (22) erstreckt und mittels eines Zahnes (25) in dem Rahmen (17) eingehängt ist.

6. Ein Scheinwerfer nach Anspruch 4 oder 5, dadurch gekennzeichnet, daß er mindestens ein Kippglied (27) umfaßt, befestigt an der Lampe (3) und mit einem Abschnitt (30) in Eingriff mit der Feder (22).

7. Ein Scheinwerfer nach Anspruch 6, dadurch gekennzeichnet, daß das Kippglied (27) an der Lampe (3) angelenkt (29) ist und einen Betätigungsabschnitt (31) aufweist, der von außerhalb des Fahrzeugs zugänglich ist, wobei der Eingriffsabschnitt (30) sich in Richtung der Feder (22) derart erstreckt, daß er das Freisetzen der Feder (22) aus der verhakten in die nicht verhakte Position bewirkt, wenn auf den Betätigungsabschnitt (31) von außerhalb mittels eines Werkzeugs (15) langgestreckter Form Druck ausgeübt wird.

## Revendications

1. Un phare (3) pour véhicules automobiles, en particulier un phare anti-brouillard comprenant, à son extrémité avant, un élément transparent (5) fermant un boîtier extérieur (4), le phare (3) étant monté de façon amovible dans une cavité (2) du véhicule et délimitant, avec cette cavité (2), un espace (16) pouvant être fermé par un cadre (17) fixé de façon amovible sur le véhicule, caractérisé en ce que des moyens de support et de guidage (18) sont fixés sur le phare (3) et sur le cadre (17), de manière à permettre le déplacement du cadre (17) entre une position fermée, rétractée, et une position ouverte avancée, dans lesquelles le cadre (17) s'étend, respectivement, sensiblement au niveau de l'élément transparent (5) du phare (3) et à distance par rapport au phare (3).

2. Un phare selon la revendication 1, caractérisé en ce qu'il comprend des moyens d'actionnement (19) du cadre (17), accessibles à partir de l'extérieur du véhicule et agissant sur les moyens de support et de guidage (18), pour déplacer le cadre (17) de la position fermée, rétractée, vers la position ouverte, avancée.

3. Un phare selon la revendication 1 ou 2, caractérisé en ce que les moyens de support et de guidage (18) comprennent, au moins, un élément bistable (22) supporté par le phare (3) et fixé au cadre (17).

4. Un phare selon la revendication 3, caractérisé en ce que l'élément bistable comprend une lame de ressort (22) reliée, par ses extrémités, au phare (3) avec pré-compression, dont la partie centrale est montée rigide avec le cadre (17), le ressort (22) étant souple et mobile entre deux positions d'accrochage et de décrochage stables dans lesquelles, respectivement, la partie concave du ressort (22) est dirigée face au cadre (17) et la partie convexe est tournée face au cadre (17).

5. Un phare selon la revendication 4, caractérisé en ce que le centre du ressort (22) est rigide et qu'un bras (24) s'étendant transversalement au ressort (22) s'engage dans le cadre (17) par une dent (25).

6. Un phare selon la revendication 4 ou 5, caractérisé en ce qu'il comprend au moins un élément basculant formant culbuteur (27) fixé au phare (3) et dont une partie (30) s'engage sur le ressort (22).

7. Un phare selon la revendication 6, caractérisé en ce que l'élément formant culbuteur (27) est monté par un pivot (29) sur le phare (3) et comprend un organe d'actionnement (31) accessible à partir de l'extérieur du véhicule, la partie venant s'engager (30) s'étendant vers le ressort (22) de manière à provoquer le déclenchement de ce ressort (22) de la position accrochée vers la position décrochée lorsqu'une pression est exercée sur l'élément d'actionnement (31), à partir de l'extérieur, par un outil (15) de forme allongée.
